# EUROPÄISCHE PATENTANMELDUNG

(11) **EP 0 526 735 A2**
(43) Veröffentlichungstag der Anmeldung: **10.02.1993**
(21) Anmeldenummer: 92111103.5
(22) Anmeldetag: 01.07.1992
(51) Int. Cl.: B23Q 3/00, B23Q 7/14, B23Q 3/10

(54) **Werkstückpalette als Werkstückträger in Fertigungs- oder Montagesystemen**

(30) Priorität: 06.08.1991 DE 4125961
(71) Anmelder: GIDDINGS & LEWIS GmbH, D-73240 Wendlingen (DE)
(72) Erfinder: Sturm,Anton, W-7306 Denkendorf (DE)
(74) Vertreter: Rüger, Rudolf, Dr.-Ing.

(57) **Zusammenfassung**

Gegenstand der Erfindung ist eine Werkstückpalette, mit der es möglich ist, eine Anzahl unterschiedlicher Werkstücke (35) eines Sortiments in einer Transferstraße zu bearbeiten, wobei der Investitionsaufwand gering ist. Erfindungsgemäß weist die Werkstückpalette mit mehreren Auflageebenen (19) in jeder Auflageebene wenigstens einen Aufspannplatz (31) auf, wobei die Auflageebenen die Seitenflächen (20) eines gedachten prismatischen Körpers enthaltend angeordnet sind, dessen Querschnitt die Form eines die Längsmittelachse umschließenden Polygons aufweist.

Zur Indexierung und Arretierung sind im Bereiche der Geraden, in denen sich die Auflageebenen schneiden, zu der Transferstraße passende Justage-und Arretiereinrichtungen (26, 27, 28, 29) angeordnet.

## Beschreibung

Die Erfindung betrifft eine Werkstückpalette gemäß dem Oberbegriff des Patentanspruches 1.

In flexiblen Bearbeitungs- und Montagesystemen und speziell in Transferstraßen wird von mehreren Bearbeitungsstationen, die durch ein geeignetes Transfersystem verkettet sind, häufig ein Sortiment von ähnlich gearteten Werkstücken bearbeitet. Die Bearbeitungsstationen sind dabei weitgehend auf an einzelnen Bearbeitungsstellen auszuführende Bearbeitungsvorgänge spezialisiert und für diese eingerichtet. Das können Montagevorgänge, spanende Bearbeitungen oder andere Bearbeitungsvorgänge sein. In jedem Fall aber führt jede der Bearbeitungsstationen an dem von dem Transfersystem herangebrachten und von einem Spannsystem ortsfest gehaltenen Werkstück jeweils den selben Bearbeitungsvorgang aus, und zwar ohne zwischenzeitlich eingerichtet oder gar umgestellt worden zu sein Eine einmalige Einrichtung der Bearbeitungstationen muß eine einwandfreie Funktion der Transferstraße über einen längeren Zeitraum gestatten. Daraus ergeben sich hohe nämlich die Aufgabe, die betreffenden von dem Transfersystem herangebrachten Werkstücke in den Bearbeitungstationen während des Bearbeitungsvorganges zu fixieren und zu arretieren. Alle Werkstücke müssen dabei innerhalb einer meist geringen Bearbeitungstoleranz bezüglich ihrer Bearbeitungsstellen exakt positioniert werden und zwar automatisch und ohne personelle Uberwachung. Außerdem sind, insbesondere dann, wenn es sich um einen spanenden Bearbeitungsvorgang an entsprechenden Bearbeitungsflächen handelt, von dem Spannsystem beträchtliche in Folge der Bearbeitung auftretende Reaktionskräfte aufzunehmen und abzuleiten. Die Positionierung des betreffenden Werkstükkes muß dabei unbedingt eingehalten werden, um die Qualität der bearbeiteten Werkstücke zu sichern.

Um dem Rechnung zu tragen und um nicht in jeder Bearbeitungsstation ein möglicherweise kompliziert gestaltetes Werkstück erneut positionieren und arretieren zu müssen, ist es in der Praxis üblich, Aufspannplätze aufweisende Werkstückpaletten einzusetzen, die fest mit dem Werkstück verspannt und zusammen mit diesem durch alle Bearbeitungsstationen getaktet werden. Bei exakt auf die Werkstückspalette aufgespannten Werkstücken sind in den Bearbeitungstationen nur noch die Werkstückpaletten zu positionieren, zu fixieren und zu arretieren. In an sich bekannter Weise weist die Transferstraße dazu auf einem festen Bett angeordnete Auflageleisten auf, auf denen die Werkstückpaletten von zwischen den Auflageleisten angeordneten Taktstangen oder anderen gleichwirkenden Antriebsmitteln in Taktrichtung getaktet werden. Dazu werden die Taktstangen, die eine Hub- Vorschub- Senkbewegung ausführen ("lift and carry"), zeitweilig form- oder kraftschlüssig mit den Werkstückpaletten in Eingriff gebracht. Bei den Bearbeitungsstationen sind in oder an den Auflageleisten Fixiermittel, beispielweise Fixierbolzen angeordnet, die die jeweilige Werkstückpalette in einer genau definierte Position ausrichten und sowohl in Taktrichtung als auch in dazu seitlicher Richtung fixieren. Mittels Spannbacken wird die Werkstückpalette in dieser Position arretiert.

Eine Anpassung der Transferstraße an unterschiedliche Werkstücke kann ohne größere Störung des Produktionsablaufes nur durch einen Wechsel der Werkstückpaletten oder durch deren jeweils entsprechende Umrüstung erfolgen. Der Wechsel der Werkstückpaletten entsprechend den zu bearbeitenden Werkstücken setzt aber voraus, daß für jeden Werkstücktyp wenigstens eine speziell ausgebildete Werkstückpalette bereitgehalten wird. Wegen der zum einen geforderten hohen langzeitstabilen Genauigkeit der Aufspannung der Werkstücke auf die Werkstückpaletten und der zum anderen von den Werkstückpaletten aufzunehmenden hohen Reaktionskräfte, sind die bereitzuhaltenden Werkstückpaletten aufwendig und teuer, wobei der Investitionsaufwand noch zusätzliche durch die für die Werkstückpaletten erforderliche Lagerkapazität vergrößert wird. Aus den genannten Gründen ist es das erklärte Ziel verschiedener Entwicklungen für Werkstückpaletten, dieselben so zu gestalten, daß sie für unterschiedliche Werkstücktypen genutzt werden können. Die vorzusehenden Umstellmöglichkeiten haben eine komplizierte und empfindliche Ausführung der Werkstückpaletten und letzlich einen hohen Kostenaufwand zur Folge.

Beispielsweise bei der Fertigung von Gelenkgabeln für Kraftfahrzeuge, stellt sich das Problem, daß in ein und derselben Transferstraße Gelenkgabeln unterschiedlicher Abmessungen zu bearbeiten sind, wobei häufig gerade verschiedene Gelenkgabeln in der Bearbeitungsfolge unmittelbar nacheinander die Bearbeitungsstationen durchlaufen sollen. Es wird angestrebt, die Gelenkgabeln in der Transferstraße zu bearbeiten, ohne die Bearbeitungsstationen jeweils neu einrichten zu müssen.

In der DE-PS 39 40 635 ist eine Werkstückpalette als Werkstückträger in Fertigungs- oder Montagesystemen geoffenbart, die insbesondere zur wahlweisen Halterung von Zylinderblöcken von Reihen- oder V-Motoren vorgesehen ist. Zu diesem Zweck ist an der Oberseite der Werkstückpalette ein einziger Aufspannplatz vorgesehen. Auf einem konzentrischen Kreis um eine durch die Kurbelwellenbohrung markierten Achse sind als Auflagemittel insgesamt 5 zueinander parallel verlaufende Anschlagleisten vorgesehen. Jeweils zwei nicht benachbarte und durch eine dazwischenliegende Anschlagleiste getrennte Anschlagleisten sind einander zugeordnet und für das Aufsetzen auf ein Transfersystem vorgesehen. Somit ist die Werkstückpalette in drei um die durch die Lagerbohrung markierte horizontale Achse gedrehten Stellungen auf das Transfersystem aufsetzbar.

Die Werkstückpalette ist speziell für die Fertigung von Zylinderblöcken von V- bzw. Reihenmotoren vorgesehen. Entsprechend weist sie lediglich einen Aufspannplatz für wahlweise zwei Zylinderblocktypen auf. Durch die Anordnung der Anschlagleisten auf dem oben beschriebenen Kreis ist die Zugänglichkeit zu dem Werkstück eingeschränkt.

Außerdem sind aus der Praxis Werkstückpaletten bekannt, die einen auf ein Transfersystem aufsetzbaren Grundkörper mit einer rechteckigen Grundfläche und einem fünfeckigen Querschnitt aufweisen. An die mit für das Zusammenwirken mit dem Transfersystem mit Halte- und Fixiereinrichtungen versehene Grundfläche schließen sich beidseits senkrecht stehende Seitenflächen an, die in geneigte Seitenflächen übergehen. Die geneigten Seitenflächen grenzen an eine parallel zu der Grundfläche verlaufende Deckfläche, auf der Aufspannplätze für Werkstücke vorgesehen sind. Unmittelbar neben den Aufspannplätzen sind Spannpratzen zum Fixieren der Werkstücke in Bearbeitungsposition angeordnet. An der Grundfläche der Werkstückpalette sind als Halte- und Fixiereinrichtungen Auflageleisten und Fixierbohrungen vorgesehen. Im Inneren der Palette sind weitere Einrichtungen zum Betätigen der Spannpratzen und zur Justage der Aufspannplätze angeordnet.

Die Umrüstung der Werkstückpalette von einem Werkstücktyp auf einen anderen ist, wenn überhaupt vorgesehen, doch zumindest aufwendig und zeitintensiv. Infolge dessen muß bei einem größeren Sortiment Von zu bearbeitenden Werkstücken ein entsprechender Vorrat von Werkstückpaletten bereitgehalten werden. Da die Werkstückpaletten verhältnismäßig teuer sind, ist der Investitionsaufwand allein für die Werkstückpaletten und die erforderliche Lagerhaltung beträchtlich. Nachteilig ist außerdem, daß die Anzahl der auf der Deckfläche angeordneten Aufspannplätze eher klein ist.

Darüberhinaus sind in der Praxis zur Halterung von Werkstücken in Werkzeugmaschinen sogenannte Spannwürfel in Gebrauch, die einen quaderförmigen Grundkörper mit einer quadratischen Grund- und Deckfläche aufweisen. Die Grundfläche ist mit verbindungsmitteln versehen, die es ermöglichen, den Spannwürfel starr an einem drehbaren Werkstücktisch anzukoppeln. An den Seitenflächen des Spannwürfels sind Spannmittel für die Befestigung von nacheinander zu bearbeitenden kleineren Werkstücken vorgesehen. Um wahlweise die auf einer ausgewählten Seitenfläche aufgespannten Werkstücke in Bearbeitungsposition zu bringen, wird der Werkstücktisch zusammen mit dem starr angekoppelten Spannwürfel um eine senkrecht auf der Grundfläche des Spannwürfels stehende Achse gedreht.

Dieser Spannwürfel ist nicht für den Einsatz in Transferstraßen und das Zusammenwirken mit einem Transfersystem geeignet.

Davon ausgehend ist es die Aufgabe der Erfindung, eine Werkstückpalette zu schaffen, mit der es möglich ist, eine Anzahl unterschiedlicher Werkstücke eines Sortiments in einer Transferstraße zu bearbeiten, wobei der Investitionsaufwand gering sein soll.

Vorstehend genannte Aufgabe wird erfindungsgemäß durch den kennzeichnenden Teil des Patentanspruchs 1 gelöst.

Durch die Anordnung von jeweils wenigstens einem Aufspannplatz in jeder Auflageebene wird die Möglichkeit eröffnet, eine größere Anzahl unterschiedlicher Aufspannplätze an der Werkstückpalette vorzusehen. Die erfindungsgemäße Ausbildung mit einem die Längsmittelachse umschließendem polygonalen Querschnitt, führt dazu, daß die auf den Aufspannplätzen aufgespannten Werkstükke bezogen auf die Längsmittelachse der Werkstückpalette radial nach außen stehend angeordnet sind. Dadurch sind sie besonders gut zugänglich und gut zu bearbeiten.

Wenn das den Querschnitt des Grundkörpers kennzeichnende Polygon gleichseitig ausgebildet ist, können alle Seitenflächen gleich ausgebildet werden und für alle Aufspannplätze ist jeweils gleich viel Platz vorhanden.

Im Bereiche der Geraden, in denen sich die Auflageebenen schneiden, sind Justage- und Arretiereinrichtungen angeordnet. Diese sind passend zu dem Transfersystem ausgebildet, so daß die Werkstückpaletten ohne manuellen Aufwand auf genaue und einfache Weise in dem Transfersystem fixiert und arretiert werden können.

Zu diesem Zweck können die Justage- und Arretiereinrichtungen vorteilhafterweise wenigstens eine parallel zu der Auflageebene ausgerichtete Auflagefläche und wenigstens eine flachenparallel dazu angeordnete Spannfläche aufweisen. Die Auflageflächen sind zur Auflage auf den Auflageleisten vorgesehen. An die Spannfläche werden die Spannbacken zur Arretierung der Werkstückpalette angelegt und festgespannt, wodurch die Auflageflächen fest gegen die Auflageleisten gespannt werden.

Die Seitenflächen des Grundkörpers begrenzen im wesentlichen einen Quader mit quadratischem Querschnitt. Dadurch sind die Seitenflächen nicht nur gleich groß, sondern zusätzlich stehen sie paarweise rechtwinklig aufeinander. Die Seitenflächen der Werkstückpalette stehen somit immer entweder senkrecht oder waagerecht. Auf diese Weise sind einfache und übersichtliche geometrische Verhältnisse geschaffen.

Im Bereiche der durch die sich schneidenden Auflageflächen gebildeten Geraden weist der Grundkörper Falze (längsverlaufend ausgebildete Ausnehmungen in der Art einspringender Kanten) auf, in denen die Justage- und Arretiereinrichtung angeordnet sind. In vorteilhafter Weise weist jede Justage- und Arretiereinrichtung je zwei rechtwinklig zueinander stehende Anschlagleisten und je zwei in der linearen Verlängerung angeordnete Hilfsanschläge auf, die teilweise über die Seitenflächen ragen. Durch diese Maßnahme werden die Auflageflächen und die Spannflächen in einfach zu fertigenden und ebenso einfach zu justierenden Anschlagleisten vorgesehen.

Das Aufsetzen der Werkstückpalette auf die Auflageleisten ist durch die beschriebene Gestaltung in verschiedenen Positionen ermöglicht, wobei eine sichere Auflage der Werkstückpalette auf den Auflageleisten gewährleistet ist. An den über die Seitenflächen ragenden Anschlagleisten und Hilfsanschlägen können Spannbacken angreifen. Die Werkstückpalette ist dadurch bei der Bearbeitung der Werkstücke sicher arretiert.

Eine besonders platzsparende Lösung ergibt sich, wenn die Justage- und Arretiereinrichtungen Indexbohrungen zur Aufnahme von Indexbolzen aufweisen.

Zur Bearbeitung einer größeren Anzahl von Werkstücken ist es auch möglich, wenn auf einer gemeinsamen Seitenfläche der Werkstückpalette Aufspannplätze für gleiche Werkstücke vorgesehen sind und wenn die auf einer Seitenfläche der Werkstückpalette angeordneten Aufspannplätze in einer Reihe angeordnet sind. Bei entsprechender Auslegung der Bearbeitungsstationen der Transferstraße können dann alle auf einer Seite der Werkstückpalette aufgespannten Werkstücke in einem Arbeitsgang bearbeitet werden.

Es ist vorteilhaft, wenn die Aufspannplätze auf den Seitenflächen so angeordnet sind, daß die Abstände der Aufspannplätze zu den zugeordneten Indexbohrungen für alle Seitenflächen jeweils gleich sind, und wenn die Aufspannplätze derart angeordnet sind, daß bei dem Abnehmen, Drehen und Wiederaufsetzen der Werkstückpalette auf die Auflageleisten die Werkstücke exakt ihre Positionen tauschen. Dann können die Werkstücke aller Seitenflächen durch Drehen der Werkstückpalette um ihre Längsmittelachse in Bearbeitungsposition gebracht werden, ohne daß dazu ein Neueinrichten der Bearbeitungsstationen nötig wäre.

In der Zeichnung ist ein Ausführungsbeispiel der Erfindung dargestellt. Es zeigen:
Fig. 1 einen Ausschnitt aus einer Transferstraße mit Bearbeitungsstationen in schematischer Darstellung, von denen nur eine dargestellt ist, und einer in der Bearbeitungsstation fixierten Werkstückpalette mit aufgespannten Werkstücken,
Fig. 2 die Werkstückpalette gemäß Fig. 1 in der Be arbeitungsstation, in einer Ansicht in Taktrichtung und
Fig. 3 die Werkstückpalette nach Fig. 1 ohne Werkstücke in einer perspektivischen Ansicht in einem anderen Maßstab.

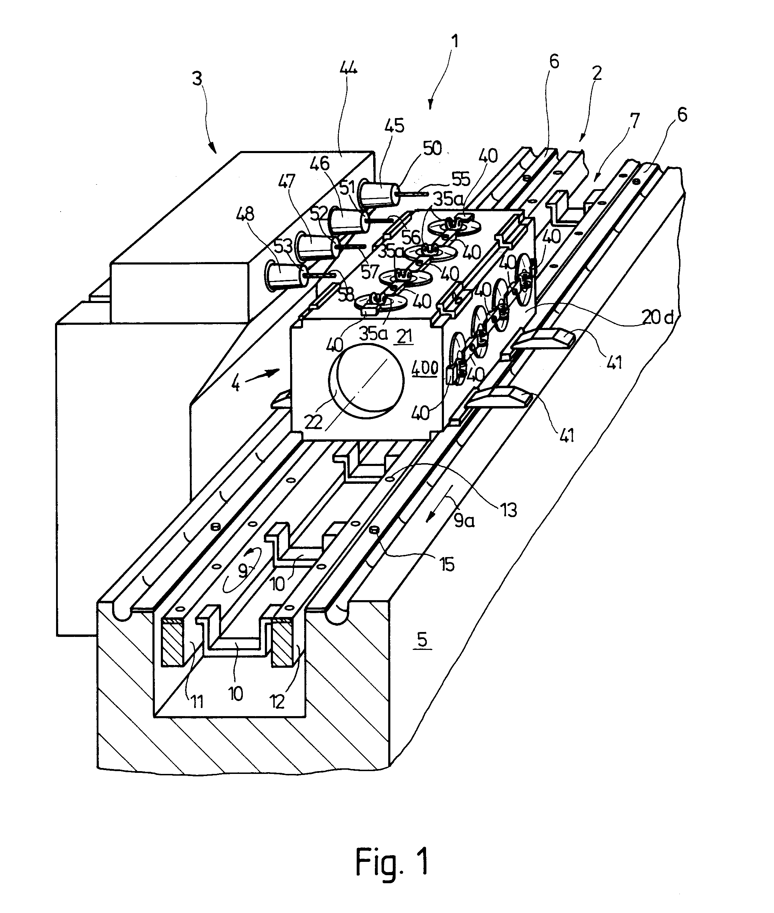

Eine in der Fig. 1 in einer perspektivischen Darstellung im Ausschnitt dargestellte Transferstraße 1 weist ein Transfersystem 2 und mehrere Bearbeitungsstationen 3 auf, von denen eine beispielhaft für mehrere jeweils für spezielle Bearbeitungsvorgänge eingerichtete unterschiedliche Bearbeitungsstationen dargestellt ist. Auf das Transfersystem 2 sind mehrere Werkstückpaletten 4 aufgesetzt, die im wesentlichen quaderförmig ausgebildet sind und von denen eine in Bearbeitungsposition fixierte Werkstückpalette 4 in Fig. 1 dargestellt ist.

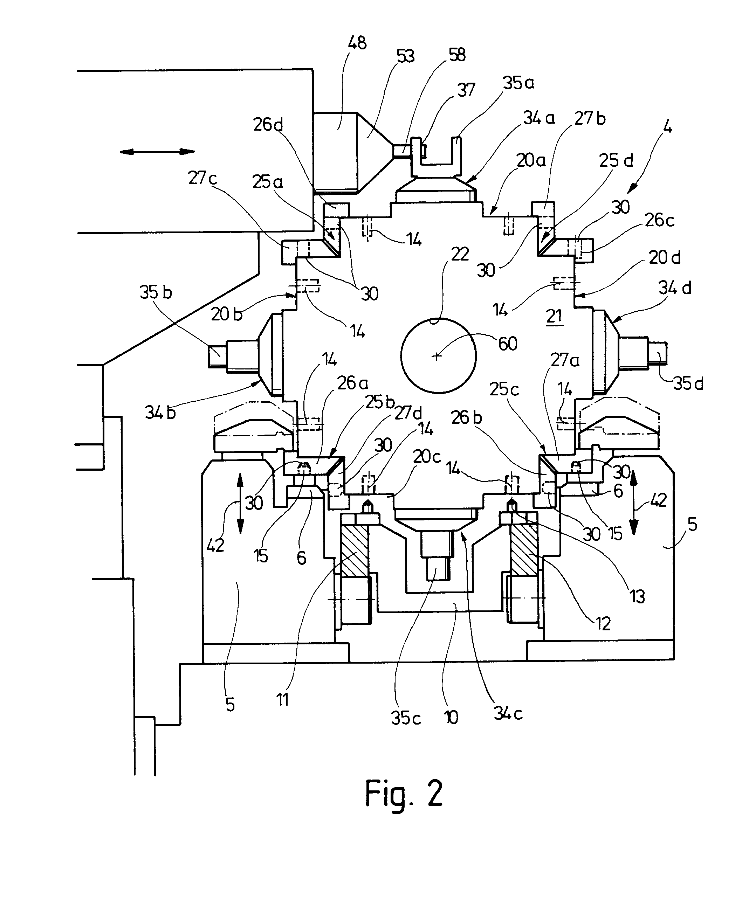

Zur Aufnahme der Werkstückpalette 4 ist ein zu dem Transfersystem gehöriges Bett 5 mit zwei parallel im Abstand zueinander angeordneten Auflageleisten 6 versehen. Zwischen den Auflageleisten 6 ist parallel zu diesen eine Taktstange 7 vorgesehen, die angetrieben durch ein nicht weiter dargestelltes Antriebssystem eine Hub- und Vorschubbewegung ("lift and carry") in der durch den Pfeil 9 bezeichneten Weise ausführt und den aufgesetzten Werkstückpaletten 4 eine Vorschubbewegung in einer Taktrichtung 9a erteilt. Die Taktstange 7 ist zweigeteilt und weist zwei durch gekröpfte Stege 10 verbundene Balken 11, 12 auf. Jeder der Balken 11, 12 ist mit Mitnehmerbolzen 13 zur zeitweiligen formschlüssigen Verbindung des betreffenden Balkens 11, 12 mit der Werkstückpalette 4, über an dieser vorgesehene Mitnehmerbohrungen 14, versehen. Wie auch aus Fig. 2 hervorgeht, sind an den im wesentlichen horizontal angeordneten Auflageleisten 6 diese durchgreifende feste oder bewegliche Indexbolzen 15 vertikal angeordnet.

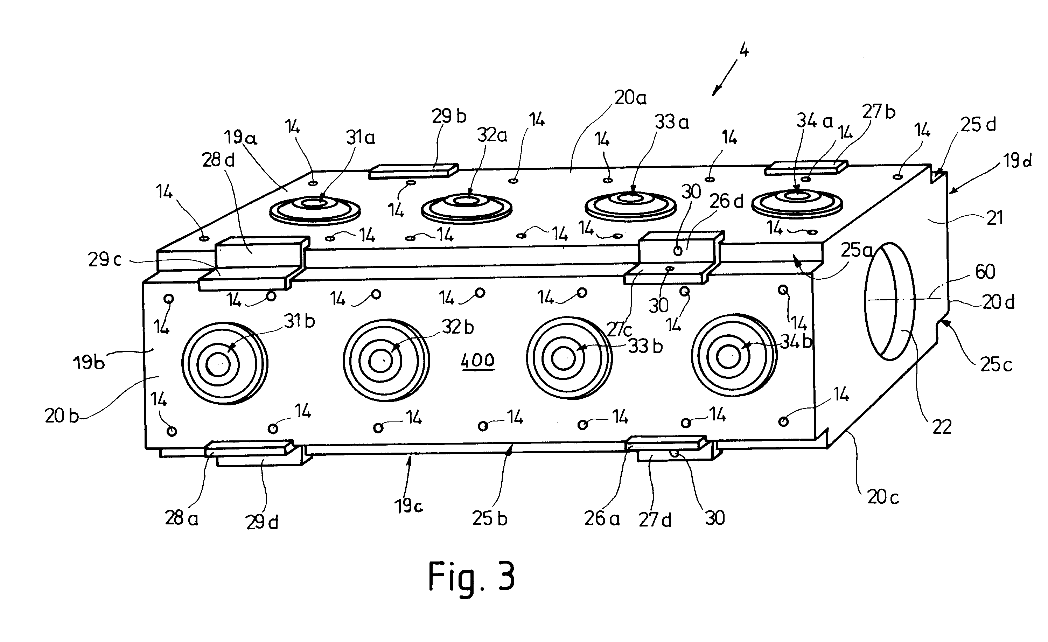

Die auf die Auflageleisten 6 des Transfersystems 2 aufgesetzte Werkstückpalette 4 weist einen ein- oder mehrteiligen Grundkörper 400 mit vier gleich großen in Auflageebenen 19a-d liegenden Seitenflächen 20 sowie zwei im wesentlichen quadratische Stirnflächen 21 auf, die mit jeweils einer Öffnung 22 versehen sind. Dabei ist in Fig. 2 eine Seitenfläche 20a oben, eine Seitenfläche 20b links, eine Seitenfläche 20c unten und eine Seitenfläche 20d rechts angeordnet. Der von den Auflageebenen 19a-d beschriebene Querschnitt ist in jedem Fall ein Polygon; bei dem vorliegenden Ausführungsbeispiel ist es im speziellen ein Quadrat. An den Kanten der quaderförmigen Werkstückpalette, an denen die Seitenflächen 20a-d aneinander grenzen, sind rechtwinklige Falze 25a-d (längsverlaufende Ausnehmungen) vorgesehen. In jedem der Falze 25a-d sind im Winkel von 90' zueinander stehende Anschlagleisten 26a-d, 27a-d einzeln justierbar angeordnet. Außerdem sind mit diesen jeweils fluchtend in den Falzen 25a-d rechtwinklig zueinander ausgerichtete justierbare Hilfsanschläge 28a-d, 29a-d angeordnet, die in der Fig. 2 verdeckt und in der Fig. 3 teilweise sichtbar sind. Dabei sind die mit den Kennbuchstaben a-d bezeichneten Anschlagleisten 26, 27 und Hilfsanschläge 28, 29 jeweils der Seitenfläche 20 mit demselben Kennbuchstaben zugeordnet und in dem der betreffenden Seitenfläche 20 gegenüberliegenden Falz 25 parallel zu der Seitenfläche 20 ausgerichtet. Beispielweise sind der Seitenfläche 20a die Anschlagleisten 26a, 27a sowie die Hilfsanschläge 28a,29a zugeordnet. Die Anschlagleisten 26a-d, 27a-d und die Hilfsanschläge 28a-d, 29a-d stehen geringfügig über die jeweils angrenzenden Seitenflächen 20a-d vor. Zur genauen Indexierung der Werkstückpalette 4 in Bearbeitungsposition sind in den Anschlagleisten 26a-d, 27a-d Indexbohrungen 30 zur Aufnahme der aus den Auflageleisten 6 vertikal nach oben stehenden Indexbolzen 15 vorgesehen.

Die Seitenfläche 20a ist mit vier Aufspannplätzen 31 a, 32a, 33a, 34a für Werkstücke 35a versehen, wobei bei Bedarf selbstverständlich auch weniger oder mehr, bspw. sechs Aufspannplätze vorgesehen sein konnen. Vorzugsweise sind die Aufspannplätze 31a-34a auf einer längs zu der Taktrichtung 9a in der Mitte der Seitenfläche 20a liegenden Linie angeordnet. Entsprechend weisen die Seitenflächen 20b-d ebenso in jeweils einer Reihe angeordneten Aufspannplätze 31 b-d, 32b-d, 33b-d, 34b-d für Werkstücke 35b-d auf.

Um die an den Werkstücken 35a-d vorgesehenen Bearbeitungsstellen 37a-d bezogen auf die Indexbohrungen 30 in auf allen Seitenflächen 20a-d übereinstimmender Lage anzuordnen, ist die Anordnung der Aufspannplätze 3134 auf jeder Seitenfläche 20 der Werkstückpalette 4 so getroffen, daß der Abstand der Aufspannplätze 31-34 von den jeweils zugeordneten Indexbohrungen 30 in Taktrichtung 9a immer der gleiche ist. Mit dieser Maßnahme wird die genaue Indexierung der Werkstückpalette 4 und die Justage der auf den Aufspannplätzen 31- 34 aufgespannten Werkstücke 32 erreicht.

Zum Aufspannen der Werkstücke 35 an den jeweiligen Aufspannplätzen 31-34, sind Spannpratzen 40 vorgesehen. Die Spannpratzen 40 und die Aufspannplätze 31-34 sind entsprechend den aufzuspannenden Werkstücken 35 so ausgebildet, daß das Aufspannen der einzelnen Werkstücke 35 lagerichtig und gleich erfolgen kann. Zur genauen Justage der Werkstückpalette 4 sind die Anschlagleisten 26, 27, 28, 29 einzeln einstellbar.

An den Bearbeitungsstationen ist die Position der Werkstückpalette 4 durch die Indexbolzen 15 fixiert. Um eine definierte Position der Werkstückpalette 4 bei der Bearbeitung der an der Werkstückpalette 4 aufgespannten Werkstücke 35 zu erreichen, sind an dem Transfersystem automatisch betätigte Spannbacken 41 vorgesehen. Die Spannbacken 41 sind in vertikaler Richtung 42 beweglich und von einer strichpunktiert dargestellten Freigabestellung in eine Klemmstellung überführbar. In dieser werden die Spannbacken zum Arretieren der Werkstückpalette 4 an die über die Flächen 20b,d ragenden Anschlagleisten 26a, 27a fest angelegt.

Die insoweit auf dem Transfersystem 2 arretierte Werkstückpalette 4 ist in der Fig. 1 an der Bearbeitungsstation 3 dargestellt. Zur Bearbeitung der an der oberen Seitenfläche 20a auf den Aufspannplätzen 31a-34a aufgespannten Werkstücke 35a, weist die Bearbeitungsstation 3 an einem gemeinsamen Schlitten 44 angeordnete Arbeitsspindeln 45-48 mit Werkzeugköpfen 50-53 auf, in denen Werkzeuge 55-58 gehalten sind. Die Positionen der Werkzeugköpfe 50-53 entsprechen genau den Positionen der aufgespannten Werkstücke 35a, so daß alle gleichzeitig bearbeitet werden. Um die Werkzeuge 55-58 mit den Werkstücken 35a in Eingriff zu bringen, führt der Schlitten 44 mit den Arbeitsspindeln 45-48 eine Zustellbewegung aus. An allen Werkstücken 35a wird in diesem Fall gemeinsam der gleiche Bearbeitungsvorgang ausgeführt; nach Ablauf des Bearbeitungsvorganges wird die Werkstückpalette 4 von den Spannbacken 41 freigegeben und von dem Transfersystem 2 zu der nächsten Bearbeitungsstation getaktet.

Selbstverständlich können an der Transferstraße auch Bearbeitungsstationen mit weniger Arbeitsspindeln, bspw. lediglich einer Arbeitsspindel, vorgesehen sein. An derartigen Bearbeitungsstationen sind die Werkstücke 35 nacheinander zu bearbeiten. In diesem Fall wird die Werkstückpalette 4 während der jeweiligen Bearbeitungsvorgänge arretiert und zur gegebenen Zeit lediglich um einen Abstand weitergetaktet, der dem Abstand der Werkstücke 35 untereinander entspricht.

Die Arbeitsweise und die Funktion der insoweit beschriebenen Werkstückpalette wird im folgenden naher erläutert:
Wie sich bereits aus der vorstehenden Beschreibung ergibt, ist die Werkstückpalette 4 bezüglich der Aufspannplätze 34a-d, der Anschlagleisten 26a-d, 27a-d und der Hilfsanschlage 28a-d, 29a-d an allen vier Seitenflächen 20a-d im wesentlichen gleich ausgebildet. Demzufolge kann die Werkstückpalette 4 in vier gegenüber einer zu der Taktrichtung 9a parallel verlaufenden Längsachse 60 um jeweils 90' gedrehten Stellungen auf die Auflageleisten 6 des Transfersystems 2 aufgesetzt und von diesen zu den der Bearbeitungsfolge entsprechenden Bearbeitungsstationen 3 getaktet werden. Dabei weist diejenige Seitenfläche 20 der Werkstückpalette 4 nach oben, auf der die für die Werkstücke 35a geeigneten Aufspannplätze 31 a-34a angeordnet sind.

Zu Beginn der Bearbeitung wird die Werkstückpalette 4 wenigstens an der Seitenfläche 20a (Fig. 2 oben) mit Werkstücken 35a bestückt. In der Folge wird die Werkstückpalette 4 von der Taktstange 7 an- und von den Auflageleisten 6 abgehoben, in Taktrichtung um die vorgesehene Distanz getragen und auf den Auflageleisten 6 in der ersten der Bearbeitungsfolge entsprechende Bearbeitungstation 3 abgesetzt. In der Bearbeitungsstation 3 greifen die Indexbolzen 15 in die Indexbohrungen 30 ein und fixieren die Werkstückpalette 4. Die Spannbacken 41 werden an die Anschlagleisten 26a, 27a und die Hilfsanschläge 28a, 29a angelegt, wodurch die Werkstückpalette 4 auf den Auflageleisten 6 des Transfersystems 2 arretiert ist. Durch eine Zustellbewegung des mit den Arbeitsspindeln 45-48 versehenen Schlittens 44 werden die Werkzeuge 55-58 mit den Werkstücken 35a in Eingriff gebracht und der vorgesehene Bearbeitungsvorgang ausgeführt. Nach Beendigung desselben geben die Spannbacken 41 die Werkstückpalette 4 frei und das Transfersystem 2 taktet die Werkstückpalette 4 zu der nächsten Bearbeitungsstation 3.

Wenn in der Transferstraße 1 andere Werkstücke 35b zu bearbeiten sind, wird die Werkstückpalette 4 zunächst in eine Wendestation gebracht. In der Wendestation fahren entsprechende Greifer in die Öffnungen 22 und halten derart die Werkstückpalette 4 drehfest. Dann wird die Werkstückpalette 4 von den Auflageleisten 6 abgehoben, um 90' um die Längsachse 60 (in Fig. 2 im Uhrzeigersinn) gedreht, so daß die Seitenfläche 20b mit den Aufspannplätzen 31b-34b nach oben weist, und in dieser Stellung wieder auf die Auflageleisten 6 aufgesetzt.

Nach der Bestückung mit den Werkstücken 35b laufen die Bearbeitungsvorgange in der Transferstaße 1 in der oben für die Werkstücke 35a beschriebenen Weise ab.

Zur Verkürzung des Arbeitsablaufes kann die Werkstückpalette 4 zu Beginn der Bearbeitung auch an mehreren oder nach entsprechenden Drehung um die Längsachse 60 auch an allen Seitenflächen 20a-d und den entsprechenden Aufspannplätzen 31a-34d mit Werkstücken 35a-d bestückt werden. Wegen der Zweiteilung der Taktstange in die Balken 11, 12 und die Kröpfung der Verbindungstege 10, ist selbst für die Werkstücke 35c, die auf den zwischen den Auflageleisten 6 befindlichen Aufspannplätzen 31c-34c aufgespannt sind ausreichend Platz vorhanden, um ein ungehindertes Takten der Werkstückpalette 4 zu gewährleisten. Auch an den in den Fig. 1 bis 3 senkrecht stehenden Seitenflächen 20b,d sind ohne weiteres Werkstücke 35b,d aufspannbar, ohne daß der Zugang der Werkzeuge 55, 58 zu den Werkstücken 35a behindert würde.

Wenn die an den Aufspannplatzen 31a-34a der Seitenfläche 20a aufgespannten Werkstücke 35a fertig bearbeitet sind, wird die Werkstückpalette 4 um die Längsmittelachse 60 gedreht. Sodann durchläuft sie mit den nun nach oben weisenden Werkstücken 35b die Transferstraße erneut. Dieser Vorgang wird solange wiederholt, bis alle auf der Werkstückpalette 4 aufgespannten Werkstücke 35a-d fertigbearbeitet sind.

Da die Aufspannplätze 31a-34d für unterschiedliche Werkstücke ausgelegt werden können, ist für vier unterschiedliche Werkstücke 35a-d nur noch eine einzige Werkstückpalette 4 notwendig. Diese kann wahlweise voll oder teilweise bestückt werden. Eine Umrüstung der Transferstraße 1 ist bei dem Einsatz der Werkstückpalette 4 zur Bearbeitung unterschiedlicher Werkstücke 35a-d nicht erforderlich- Die Anzahl der für unterschiedliche Werkstücke 35a,d bereitzuhaltenden Werkstückpaletten 4 ist gering, wodurch der Investitionsaufwand für die Werkstückpaletten und der Aufwand für die Bereithaltung der Werkstückpaletten 4 stark verringert ist.

## Patentansprüche

1. Werkstückpalette (4) als Werkstückträger für Transferstraßen (1), mit einem Grundkörper (400), der zur Aufnahme eines an einem Aufspannplatz (31) aufgenommenen und durch dort vorgesehene Spannmittel (40) zu spannenden Werkstückes (35) eingerichtet und in ein Transfersystem (2) wahlweise in einer von mehreren Positionen einsetzbar ist, von denen jede durch an dem Grundkörper (400) angeordnete jeweils in einer gemeinsamen Auflageebene (19) liegende Auflagemittel (26, 27, 28, 29) bestimmt ist, wobei die Auflageebenen (19) der den einzelnen Positionen zugeordneten Auflagemittel (26, 27, 28, 29) sich jeweils paarweise längs Geraden schneiden, die parallel zu der Längsmittelachse (60) des Grundkörpers (400) verlaufen, sowie mit im Bereiche der an den Auflagemitteln (26, 27, 28, 29) vorgesehenen Auflageflächen angeordneten Indexiermitteln (30) und Arretiermitteln, dadurch gekennzeichnet, daß an dem Grundkörper (400) jeder Auflageebene (19) wenigstens ein Aufspannplatz (31) mit zugehörigen Spannmitteln (40) zugeordnet ist, und daß die Auflageebenen (19a-d) die Seitenflächen (20) eines gedachten prismatischen Körpers enthaltend angeordnet sind, dessen Querschnitt die Form eines die Längsmittelachse (60) umschließenden Polygons aufweist.

2. Werkstückpalette nach Anspruch 1, dadurch gekenn zeichnet, daß das den Querschnitt des Grundkörpers (400) kennzeichnende Polygon gleichseitig ausgebildet ist.

3. Werkstückpalette nach Anspruch 1, dadurch gekennzeichnet, daß die Justage- und Arretiereinrichtungen (26, 27, 28, 29) im Bereiche der Geraden, in denen sich die Auflageebenen (19) schneiden, angeordnet sind.

4. Werkstückpalette nach Anspruch 1, dadurch gekennzeichnet, daß die Justage- und Arretiereinrichtungen (26, 27, 28, 29) jeweils wenigstens eine parallel zu der Auflageebene ausgerichtete Auflagefläche und jeweils wenigstens eine flächenparallel dazu angeordnete Spannfläche aufweisen.

5. Werkstückpalette nach Anspruch 1, dadurch gekennzeichnet, daß der Grundkörper (400) Seitenflächen (20) aufweist, die im wesentlichen einen Quader mit quadratischem Querschnitt begrenzen.

6. Werkstückpalette nach Anspruch 5, dadurch gekennzeichnet, daß der Grundkörper (400) im Bereiche der durch die sich schneidenden Auflageebenen (19) gebildeten Geraden Falze (25) in der Art längsverlaufender einspringender Kanten aufweist.

7. Werkstückpalette nach Anspruch 6, dadurch gekennzeichnet, daß die Justage- und Arretiereinrichtung (26, 27, 28, 29) in den Falzen (25) angeordnet sind.

8. Werkstückpalette nach Anspruch 7, dadurch gekennzeichnet, daß jede Justage- und Arretiereinrichtung je zwei rechtwinklig zueinander stehende Anschlagleisten (26a, 27d) und je zwei in der linearen Verlängerung angeordnete Hilfsanschläge (28a, 29d) aufweist (Fig. 3), die teilweise über die Seitenflächen (20b, 20c) ragen.

9. Werkstückpalette nach Anspruch 1, dadurch gekennzeichnet, daß die Justage- und Arretiereinrichtungen (26, 27, 28, 29) Indexbohrungen (30) zur Aufnahme von Indexbolzen (15) aufweisen.

10. Werkstückpalette nach Anspruch 1, dadurch gekennzeichnet, daß auf einer gemeinsamen Seitenfläche (20a) der Werkstückpalette (4) Aufspannplätze (31a-34a) für gleiche Werkstücke (35a) vorgesehen sind.

11. Werkstückpalette nach Anspruch 1, dadurch gekennzeichnet, daß die auf einer Seitenflache (20a) der Werkstückpalette (4) angeordneten Aufspannplätze (3a-3d) in einer Reihe angeordnet sind.

12. Werkstückpalette nach Anspruch 5 und 6, dadurch gekennzeichnet, daß die Aufspannplatze (31a-34d) auf den Seitenflachen (20a-20d) so angeordnet sind, daß die Abstände der Aufspannplätze (31a-34a, 31b-34b, 31c-34c, 31 d-34d) zu den zugeordneten Indexbohrungen (30) für alle Seitenflächen (20a-20d) jeweils gleich sind.
